# EUROPEAN PATENT APPLICATION

(11) **EP 3 291 394 A1**
(43) Date of publication of application: **07.03.2018**
(21) Application number: 16186869.0
(22) Date of filing: 01.09.2016
(51) Int. Cl.: H02G 3/12, H02G 3/18, A47B 21/06, H01R 24/76

(54) **UPPER PORTION OF A SOCKET, BASE PORTION OF A SOCKET AND SOCKET ADAPTED TO BE MOUNTED IN A BUILDING SURFACE COVERING**

(71) Applicant: Tarkett GDL S.A., 9779 Lentzweiler (LU)
(72) Inventor: REITHLER, Christophe Claude René, 7220 Walferdange (LU)
(74) Representative: Lavoix

(57) **Abstract**

The present invention relates to an upper portion (40) of a socket (1) adapted to be mounted in a building surface covering (30) comprising the upper portion (40) and a base portion (10), the upper portion (40) having a connecting surface (42) for connecting the upper portion to the base portion, and a second surface (3) comprising at least one opening (5) for receiving a plug, wherein the connecting surface (42) comprises at least one first connecting device (44) cooperating with at least one second connecting device (18) of the base portion for releasably connecting the upper portion to the base portion, characterized in that the connecting surface (42) includes at least one first guiding device (50) cooperating with at least one second guiding device (20) of the base portion for guiding the movement to connect the upper portion to the base portion, wherein the at least one first guiding device (50) projects away from the connecting surface (42) of the upper portion, and/or is formed by at least one groove.

## Description

The present invention concerns an upper portion of a socket adapted to be mounted in a building surface covering comprising the upper portion and a base portion.

Further, the present invention concerns a base portion of a socket adapted to be mounted in a building surface covering comprising the base portion and an upper portion

In addition, the present invention relates to a socket adapted to be mounted in a building surface covering comprising an upper portion and a base portion.

EP 2 887 479 A1 discloses a socket comprising a first portion and a second portion. The first portion is connected to the second portion with a bayonet coupling.

However, it is difficult to connect the first portion to the second portion, such that they are correctly aligned.

Object of the invention is to provide a reliable connection between a base portion and an upper portion of a socket, which is easy to mount.

According to an aspect, an upper portion of a socket is provided which is adapted to be mounted in a building surface covering comprising the upper portion and a base portion, the upper portion having a connecting surface for connecting the upper portion to the base portion, and a second surface comprising at least one opening for receiving a plug, wherein the connecting surface comprises at least one first connecting device cooperating with at least one second connecting device of the base portion for releasably connecting the upper portion to the base portion, characterized in that the connecting surface includes at least one first guiding device cooperating with at least one second guiding device of the base portion for guiding the movement to connect the upper portion to the base portion, wherein the at least one first guiding device projects away from the connecting surface of the upper portion, and/or is formed by at least one groove.

According to particular embodiments, the upper portion may include the following features, which may be combined in any technical feasible combination:
- the first and second guiding devices are adapted to guide a circular movement;
- the first and second guiding devices are adapted to align electrical connectors between the upper portion and the base portion;
- the at least one first guiding device projects towards the base portion and/or is rim shaped;
- the at least one first guiding device has a circular form and/or includes at least one segment of a circle;
- the first and second connecting devices form a bayonet connection;
- the upper portion comprises a first locking device cooperating with a second locking device of the base portion for locking the upper portion relative with respect to the base portion, wherein, in particular the first locking device is movable; and/or
- the connecting surface is on the opposite side of the second surface.

According to another aspect, an base portion of a socket is provided adapted to be mounted in a building surface covering comprising an upper portion and a base portion, wherein the base portion having a connecting surface for connecting the base portion to the upper portion, wherein the connecting surface comprises at least one second connecting device cooperating with at least one first connecting devices of the upper portion for releasably connecting the base portion to the upper portion, characterized in that the connecting surface includes at least one second guiding device cooperating with at least one first guiding device of the upper portion for guiding the movement to connect the upper portion to the base portion, wherein the at least one second guiding device projects away from the connecting surface of the base portion, and/or is formed by at least one groove.

According to particular embodiments, the base portion may include the following features, which may be combined in any technical feasible combination:
- the first and second guiding devices are adapted to align the electrical connectors between the upper portion and the base portion;
- the at least one first guiding device projects towards the base portion and/or is rim shaped, and/or wherein the at least one second guiding device has a circular form and/or includes at least one segment of a circle; and/or
- the base portion includes at least one ear adapted to extend in or below a building surface covering.

According to a further aspect, a socket adapted to be mounted in a building surface covering comprising a upper portion and a base portion is provided, wherein the upper portion is an upper portion according to an embodiment disclosed herein, and the base portion is a base portion according to an embodiment disclosed herein.

According to particular embodiments, the socket may include the following features, which may be combined in any technical feasible combination:
- the socket, in the mounted configuration, is adapted to arrange at least one portion of a building surface covering is provided between a section of the upper portion and a section of the base portion, in particular the at least one ear of the base portion; and/or
- the bayonet coupling has an engaged position relative where the base portion and the upper portion are fixed to each other and an unengaged position where the base portion and the upper portion are separable, wherein the first and second locking devices (22, 51) lock the upper portion and the base portion to each other in the engaged position, such that a movement to the unengaged position is inhibited.

So that the manner in which the above recited features of the present invention can be understood in detail, a more particular description of the invention, briefly summarized above, may be read by reference to embodiments. The accompanying drawings relate to embodiments of the invention and are described in the following:
Fig. 1 shows schematically in a perspective view a socket according to an embodiment in a mounted configuration;
Fig. 2 shows schematically in a perspective view the socket according to an embodiment in an unmounted configuration; and
Fig. 3 shows schematically in a perspective view the socket in an unmounted configuration where the base is provided in a building surface covering.

It should be noted that the terms "upper" and "lower" are used in this patent application to designate specific portions of the socket when mounted on a floor to simplify the understanding of the description. However, the socket may be mounted also to other surfaces of a building like a wall or a ceiling. The floor is covered, according to an embodiment, with a floor covering. Accordingly, in other embodiments, the building surface covering is a floor covering, a wall covering, or a ceiling covering. In an embodiment, the floor covering may be, for example a carpet, parquet flooring, or linoleum.

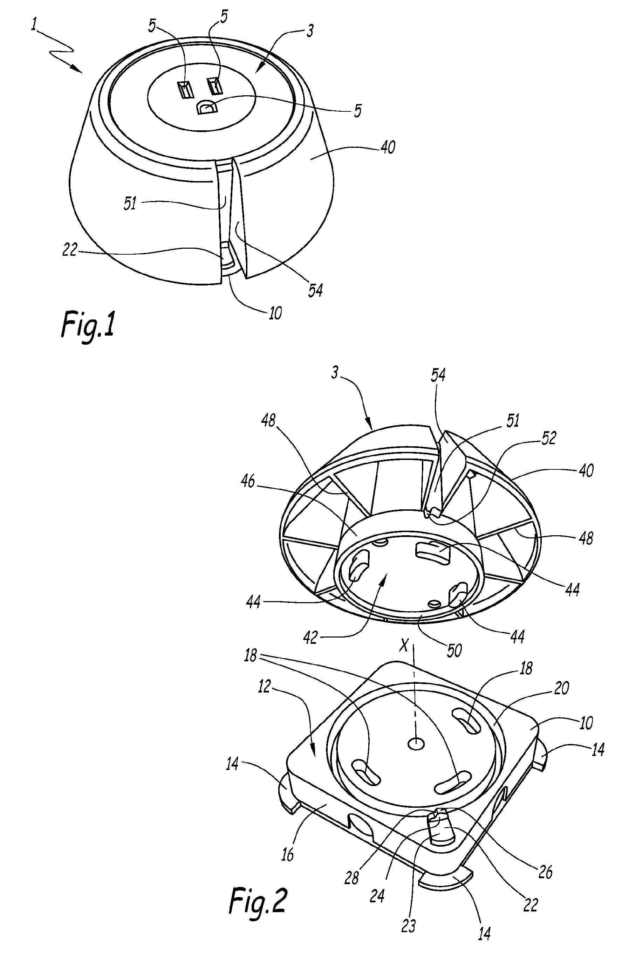

Fig. 1 shows an embodiment of a socket 1 according to an embodiment in a mounted configuration.

According to an embodiment, the socket is provided for a network connection, a power supply connection, or the like. For that purpose, the socket provides at an surface 3 at the upper side of the socket 1, which is provided with at least one opening 5 for receiving a plug (not shown).

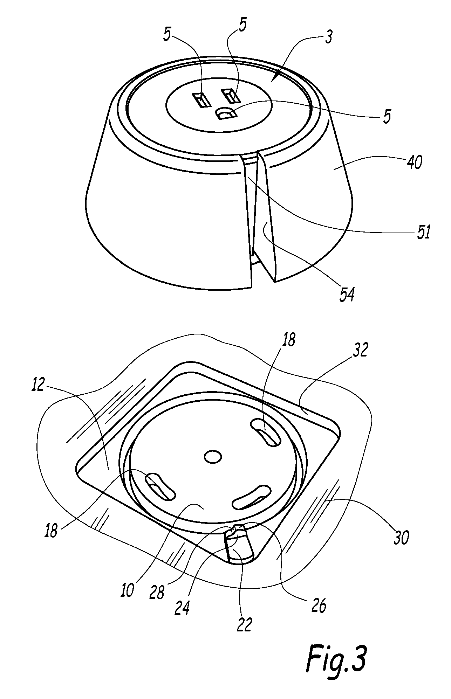

As it can be seen in Figures 2 and 3, the socket 1 comprises a base portion 10 adapted to be fixed to the floor covering 30 and an upper portion 40 which is adapted to fixed to the base 10 and which provided to extend above the floor covering 30.

The floor covering 30 comprises an opening 32 for the socket 1. The base portion 10 has substantially a cuboid shape corresponding substantially to the opening 32 of the floor covering 30. In the embodiment shown, an upper, connecting surface 12 of the base portion 10 has a substantial square shape. In other embodiments, the connecting surface 12 of the base portion 10 may have also another shape, for example a round, circular, oval, or hexagonal shape. The opening 32 of the floor covering 30 may also have a correspondingly formed shape. The connecting surface 12 is substantially flat and extends in a plane substantially orthogonal to an axis X.

The base portion 10 is adapted to extend at least partially below the floor covering 30, when the base portion 10 is placed into the opening 32 of the floor covering 30. For that purpose, the base includes at least one ear 14. For example, the ears 14 extend in a plane parallel to the floor covering away, in particular radially away, from the base portion 10. The ears prevent that the socket can be pulled out of the opening 32 after it has been installed.

In case of a plurality of ears 14, the ears 14 may be distributed regularly around the circumference 16, in particular the lower end of the circumference 16, of the base portion 10. For example, the base portion 10 may include two or more ears 14. In one embodiment, an ear 14 is provided at each corner of the base portion 10. The ears 14 may, for example extend each in a different direction away from the circumference 16 of the base portion 10.

In an embodiment, the base portion 10 is adapted to be fixed or locked to the surface of the building, for example using a screw or another fixation device, and/or it may be fixed or locked to the floor covering 30, for example with a snap connection.

Further, the base portion 10 of the socket 1 has on its connecting surface 12 a plurality of regularly circumferentially spaced apart openings 18 having the form of a section of a circle around the axis X and hollow areas (not shown) in the base portion adjacent to the openings 18 in direction of a circle formed by the openings 18. In figures 2 and 3, three openings 18 are shown, however the base portion 46 of the socket may comprise more or less openings 18.

The openings 18 are provided for a bayonet connection between the upper portion 40 of the socket 1 and the base portion 10 of the socket 1, such that hooks provided in the upper portion 40 may cooperate with the openings 18 and the hollow areas to fix the upper portion 40 and the base portion 10 together. The bayonet connection allows a movement around the axis X of the upper portion 40.

For that purpose, the upper portion 40 has a connecting surface 42, which is provided with hooks 44, which have to be engaged in the openings 18 of the base portion 10 of the socket 1.

The upper portion 40 of the socket 1 has a circular central portion 46 which projects from an abutting surface 48 to be placed on the upper surface of the floor covering 30. The circular central portion 46 includes the connecting surface 42, which is adapted to be brought into abutment with the connecting surface 12 of the base portion. According to an embodiment, when connected to the base portion 10, the connecting surface 42 of the upper portion is arranged in a plane substantially orthogonal to the axis X.

The hooks 44 have a slightly corresponding form of a section of a circle corresponding or matching to the openings 18, such that the hooks 44 can be inserted into the openings 18. The number of hooks 44 corresponds to the number of openings 18 in the base portion.

The connection, in particular the bayonet connection between the upper portion 40 and the lower portion 10 of the socket 1, may have also other forms. For example it may use pinions instead of hooks.

In another embodiment, the upper portion 40 may be provided with the at least one opening and the base portion 10 may be provided with the at least one hook 44. In a further embodiment, both, the upper portion 40 and the base portion 10 may include hooks 44 and openings 18.

Further, the base portion 10 includes a circular guiding groove 20. The circular guiding groove 20 is provided for enabling the guiding of the upper portion 40 with respect to the base portion 10, when mounted together. According to an embodiment, the groove is a closed circle centered around the axis X. In other embodiments, the guiding groove 20 may include sections of the circle.

According to an embodiment, the guiding groove 20 is provided radially outside from the openings 18 in view of the axis X.

The upper portion 40 is provided with a corresponding guiding projection in form of a rim 50. The guiding projection 50 has a circular shape and is adapted to cooperate with the guiding groove 20. For example, the guiding projection 50 has the form of a closed circle. In other embodiments, the guiding projection 50 may include sections of the circle.

According to an embodiment, the guiding projection 50 is provided radially outside from the hooks 44 in view of the axis X, when mounted on the base portion 10.

According to an embodiment, the guiding projection 50 is provided at the circumference of the circular central portion 46. However, it may be also located at other portions of the circular central portion 46.

The guiding groove 20 and the guiding projection 50 are adapted to cooperate to enable a centering of the upper portion 40 around the axis X. Further, the guiding groove 20 and the guiding projection facilitate the mounting of the upper portion 40 to the base portion 10.

In further embodiments, the base portion 10 may include at least one guiding projection and the upper portion 40 may include at least one guiding groove.

In an embodiment, the base portion 10 includes further a first locking device 22. The first locking device 22 cooperates with a slit or cutout portion provided in the upper portion 40 as it will be explained later. The first locking device 22 is movable parallel to the axis X and biased upwardly, for example using a spring, so that the first locking device 22 projects slightly above the connecting surface 12. The first locking device 22 has a substantially flat surface 23 orthogonal to the axis X. Further, the first locking device 22 presents a projection 24 with a camming surface 26 and a locking surface 28. The projection 24 projects from the flat surface 23 towards the upper portion 40.

The camming surface 26 is oblique to the connecting surface 12 and the axis X. The locking surface 28 is arranged in parallel to the axis X. The camming surface 26 and the locking surface 28 form an acute angle. The locking surface is arranged, such that a movement against the locking surface, i.e. orthogonal to the locking surface 28, is prevented, for example in Figure 2 in the counter clock direction, when looking from the above.

A second locking device 51 is provided on the upper portion 40. The second locking device 51 is also movable in parallel to the axis X, when the upper portion 40 is mounted to the base portion 10. The second locking device 51 is biased towards the base portion 10, for example with a spring (not shown). The second locking device includes a locking surface 52 adapted to abut against the locking surface 28 if the second locking device 51 engages the first locking device 22 to prevent a rotational movement around the X axis.

For example, the locking surface 52 is substantially parallel to the axis X. Further, the upper portion 40 is provided with a cutout portion 54, in which second locking device 51 is movably arranged.

In an embodiment, the size of the cutout portion 54 in circumferential direction around the axis X corresponds to the dimension of the first locking device 22, in particular of the flat surface 23, in circumferential direction around the axis X, such that the first locking device 22 can be engaged in the cutout portion 54 of the upper portion 40. In other words, in case that the first locking device 22, in particular the flat surface thereof, cooperates with the cutout portion 54, a movement of the base portion relative to the upper portion in circumferential direction around the axis X is prevented.

In the following, the mounting and unmounting of the upper portion 40 to the base portion 10 is described in more detail.

In a first step, the base portion 10 is arranged in the opening 32 of the floor covering 30, such that the ears 14 extend below the floor covering 30.

Then, the upper portion 56 of the socket 1 is connected to the base portion 10 using the bayonet connection 18, 44. Thus, when the hooks 44 are engaged into the openings 18 and the hollow areas in the base portion 10, the upper portion 40 and the base portion 10 cannot be separated in direction of the axis X. For the bayonet connection a turning movement is performed. For example, this turning movement is guided by the guiding groove 20 and the guiding projection 46. During the turning movement in clockwise direction, in an embodiment, the abutting surface 48 may push down the first locking device 22.

Thus, the connecting surfaces 12, 42 of the upper portion 40 and the base portion 10 abut each other.

Further, when the upper portion 40 is in the final position, the first locking device 22 is aligned with the cutout portion 54. In an embodiment, the first locking device 22, moves then due to the spring biasing force upwardly into the cutout portion 54 to fix and lock the base portion 10 with respect to the upper portion 40. In that position, the upper portion 40 is correctly fixed to the base portion 10 of the socket 1.

In an embodiment, the first locking device 22, in particular the flat surface 23 thereof, is used as a visual indication 64 on the lower part and a visual cutout portion 54 in the upper portion 40 of the socket 1 are aligned with respect to each other, so that a user knows, when the upper portion 40 of the socket is correctly fixed to the base portion 10 of the socket.

Further, during the turning movement to fix the upper portion 40 to the base portion 10, the second locking device 51 slides along the camming surface 26 until the a locking surface 52 of the second locking device engages the locking surface 28 of the first locking device. Then, both locking surfaces 28, 52 are arranged substantially in parallel, for example substantially in parallel to the axis X. According to an embodiment, the second locking device 40 is also slightly pushed upwardly during the movement, until it moves downwardly in the final position.

For unmounting the upper portion 40 from the base portion 10, the first locking device 22 is pushed down or the second locking device is pulled upwardly, to disengage the locking surface 28, 52 from each other and to turn the upper portion 40 in counter clockwise direction.

## Claims

1. Upper portion (40) of a socket (1) adapted to be mounted in a building surface covering (30) comprising the upper portion (40) and a base portion (10), the upper portion (40) having a connecting surface (42) for connecting the upper portion to the base portion, and a second surface (3) comprising at least one opening (5) for receiving a plug, wherein the connecting surface (42) comprises at least one first connecting device (44) cooperating with at least one second connecting device (18) of the base portion for releasably connecting the upper portion to the base portion, **characterized in that** the connecting surface (42) includes at least one first guiding device (50) cooperating with at least one second guiding device (20) of the base portion for guiding the movement to connect the upper portion to the base portion, wherein the at least one first guiding device (50) projects away from the connecting surface (42) of the upper portion, and/or is formed by at least one groove.

2. Upper portion according to claim 1, wherein the first and second guiding devices (20, 50) are adapted to guide a circular movement.

3. Upper portion according to claim 1 or 2, wherein the first and second guiding devices are adapted to align electrical connectors between the upper portion (40) and the base portion (10).

4. Upper portion according to one of the preceding claims, wherein the at least one first guiding device projects towards the base portion and/or is rim shaped.

5. Upper portion according to one of the preceding claims, wherein the at least one first guiding device has a circular form and/or includes at least one segment of a circle.

6. Upper portion according to one of the preceding claims, wherein the first and second connecting devices (18, 44) form a bayonet connection.

7. Upper portion according to one of the preceding claims, wherein the upper portion comprises a first locking device (51) cooperating with a second locking device (22) of the base portion for locking the upper portion relative with respect to the base portion, wherein, in particular the first locking device (51) is movable.

8. Upper portion for a socket according to one of the preceding claims, wherein the connecting surface (42) is on the opposite side of the second surface (3).

9. Base portion (10) of a socket adapted to be mounted in a building surface covering comprising an upper portion (40) and a base portion (10), wherein the base portion having a connecting surface (12) for connecting the base portion to the upper portion, wherein the connecting surface (12) comprises at least one second connecting device (18) cooperating with at least one first connecting devices (44) of the upper portion (40) for releasably connecting the base portion to the upper portion, **characterized in that** the connecting surface (12) includes at least one second guiding device (20) cooperating with at least one first guiding device (50) of the upper portion for guiding the movement to connect the upper portion to the base portion, wherein the at least one second guiding device (50) projects away from the connecting surface (12) of the base portion and/or is formed by at least one groove.

10. Base portion according to claim 9 or 10, wherein the first and second guiding devices are adapted to align the electrical connectors between the upper portion and the base portion.

11. Base portion according to one of the preceding claims 9 to 10, wherein the at least one first guiding device projects towards the base portion and/or is rim shaped, and/or wherein the at least one second guiding device has a circular form and/or includes at least one segment of a circle.

12. Base portion according to one of the preceding claims 9 to 11, wherein the base portion (10) includes at least one ear (14) adapted to extend in or below a building surface covering.

13. Socket (1) adapted to be mounted in a building surface covering comprising a upper portion (40) and a base portion (10), wherein the upper portion is an upper portion according to one of the claims 1 to 8, and the base portion is a base portion according to one of the claims 9 to 12.

14. Socket according to one of the preceding claims, wherein the socket, in the mounted configuration, is adapted to arrange at least one portion of a building surface covering (30) is provided between a section (48) of the upper portion (40) and a section of the base portion, in particular the at least one ear (14) of the base portion.

15. Socket according to one of the preceding claims, wherein the bayonet coupling has an engaged position relative where the base portion (10) and the upper portion (40) are fixed to each other and an unengaged position where the base portion and the upper portion are separable, wherein the first and second locking devices (22, 51) lock the upper portion and the base portion to each other in the engaged position, such that a movement to the unengaged position is inhibited.
